# EUROPEAN PATENT APPLICATION

(11) **EP 0 997 330 A1**
(43) Date of publication of application: **03.05.2000**
(21) Application number: 99121595.5
(22) Date of filing: 29.10.1999
(51) Int. Cl.: B60H 1/32

(54) **Air-conditioner having a CO2 refrigerating circuit capable of minimizing an influence of a damage of a component thereof**

(30) Priority: 29.10.1998 JP 30887698
(71) Applicant: SANDEN CORPORATION, Isesaki-shi Gunma 372 (JP)
(72) Inventor: Komatsu, Shunji, Isesaki-shi, Gunma 372 (JP)
(74) Representative: Prüfer, Lutz H., Dipl.-Phys.

(57) **Abstract**

In an air conditioner including a refrigerating circuit containing carbon dioxide as a refrigerant, a pressure fragile portion (20a) is formed in a part of the refrigerating circuit. The refrigerating circuit includes a first heat exchanger (4) and a second heat exchanger (6). The first heat exchanger is for heat radiation from the refrigerant. The second heat exchanger is for heat absorption to the refrigerant. Generally, the refrigerating circuit further includes a compressor (3), an expansion mechanism (5), a first pipeline (20) connecting the compressor and the first heat exchanger, a second pipeline (21) connecting the first heat exchanger and the expansion mechanism, a third pipeline (21) connecting the expansion mechanism and the second heat exchanger, and a fourth pipeline (22) connecting the second heat exchanger and the compressor.

## Description

### Background of the Invention:

This invention relates to a refrigerating circuit using carbon dioxide (CO₂) as a refrigerant and, in particular, to an automobile air conditioner having the above-mentioned refrigerating circuit.

Considering the terrestrial environment, development is being currently made of a fluorocarbon-free refrigerating circuit using a nonfluorocarbon refrigerant confined therein. As one of such fluorocarbon-free refrigerating circuits, proposal is made of a refrigerating circuit using carbon dioxide (CO₂) as a refrigerant. The refrigerating circuit will hereinafter be called a CO₂ refrigerating circuit. Even if the refrigerant leaks out from the CO₂ refrigerating circuit, it is unnecessary to worry about occurrence of a fire accident as will be understood from the characteristic of CO₂ as the refrigerant. Therefore, it is advantageous to apply the CO₂ refrigerating circuit to an air conditioner for an automobile in which an engine is mounted.

During operation of the air conditioner, a refrigerant pressure in the CO₂ refrigerating circuit is higher at any portion in the circuit than that of a fluorocarbon refrigerating circuit with a fluorocarbon refrigerant (for example, R22 or R134a) confined therein. In the CO₂ refrigerating circuit, the refrigerant pressure is 12-15 MPa (megapascal) and 3-5 MPa on a so-called high-pressure side and a so-called low-pressure side, respectively. It is noted here that the high-pressure side is a portion between a discharge chamber of a compressor to an expansion valve while the low-pressure side is a portion between the expansion valve and a suction chamber of the compressor. On the other hand, in the fluorocarbon refrigerating circuit with R134a confined therein, the refrigerant pressure is 0.8-1.2 MPa and 0.3-0.5 MPa on the high-pressure side and the low-pressure side, respectively.

Such a high refrigerant pressure of the CO₂ refrigerating circuit may possibly result in the following disadvantages.

At first, in the above-mentioned CO₂ refrigerating circuit, a pressure rise or a pressure drop at the start and the stop of the air conditioner are extremely greater than those of the fluorocarbon refrigerating circuit. Specifically, the pressure rise or the pressure drop in the CO₂ refrigerating circuit has a value between 5 and 8 MPa, which is far greater than a value between 0.8 and 1.2 MPa in the fluorocarbon refrigerating circuit with R134a confined therein. Since the pressure rise or the pressure drop having such a great value occurs every time when the air conditioner is started or stopped, component devices of the CO₂ refrigerating circuit and pipes connecting the component devices are subjected to load variation frequently repeated. As a result, the component devices and the pipes may possibly cause fatigue fracture. Such fracture can be caused at any portion in the air conditioner. If the fracture is caused at a portion inside a car compartment of the automobile, a carbon dioxide gas (CO₂ gas) will leak into the car compartment. This may result in a serious disadvantage.

Next, in the CO₂ refrigerating circuit mentioned above, the refrigerant is put into a supercritical state and is not turned into a liquid phase (i.e., condensed) on the high-pressure side. Therefore, in case where the rotation speed changes in the engine which drives the compressor or in case where the thermal load varies in an evaporator, the refrigerant pressure on the high-pressure side will immediately be varied. As a result, the peak pressure on the high-pressure side has a great value. Therefore, a gas cooler (corresponding to a condenser in the fluorocarbon refrigerating circuit) as a high-pressure side component of the CO₂ refrigerating circuit and a pipe connected to the gas cooler may possibly be damaged under such an unbearable pressure. If the damage occurs in an intense and shocking manner, fragments may scatter around to break or damage other automobile component devices disposed in an engine room. Taking the above into consideration, a pressure switch as a safety arrangement is provided at an appropriate position on the high-pressure side so as to avoid the above-mentioned disadvantage. However, the pressure switch achieves such a desired function by converting the refrigerant pressure into an electric signal and sending the electric signal to a control section. Therefore, upon occurrence of interruption or improper connection of a conductor wire for sending the electric signal, the pressure switch can not serve as the safety arrangement.

### Summary of the Invention:

It is therefore an object of the present invention to provide an arrangement capable of minimizing a disadvantage resulting from possible fracture or damage of a component of a CO₂ refrigerating circuit.

Other object of the present invention will become clear as the description proceeds.

According to the present invention, there is provided an air conditioner which includes a refrigerating circuit containing carbon dioxide as a refrigerant, the refrigerating circuit comprising a first heat exchanger for heat radiation from the refrigerant and a second heat exchanger for heat absorption to the refrigerant, characterized in that a pressure fragile portion is formed in at least one portion of the refrigerating circuit.

### Brief Description of the Drawing:

Fig. 1 shows, together with a part of an automobile, an automobile air conditioner according to this invention as seen from the above;
Fig. 2 is a sectional view of a characteristic part of a first embodiment of this invention;
Fig. 3 is a sectional view of a characteristic part of a second embodiment of this invention;
Fig. 4 is a sectional view of a characteristic part of a third embodiment of this invention;
Fig. 5 is a sectional view of a characteristic part of a fourth embodiment of this invention;
Fig. 6 is a sectional view taken along a line VI-VI in Fig. 5;
Fig. 7 is a sectional view of a characteristic part of a fifth embodiment of this invention;
Fig. 8 is a sectional view of a characteristic part of a sixth embodiment of this invention;
Fig. 9 is a sectional view of a characteristic part of a seventh embodiment of this invention;
Fig. 10 is a sectional view taken along a line X-X in Fig. 9;
Fig. 11 is a sectional view of a characteristic part of an eighth embodiment of this invention; and
Fig. 12 is a sectional view taken along a line XII-XII in Fig. 11.

### Description of the Preferred Embodiments:

Description will now be made as regards several preferred embodiments of this invention with reference to the drawing.

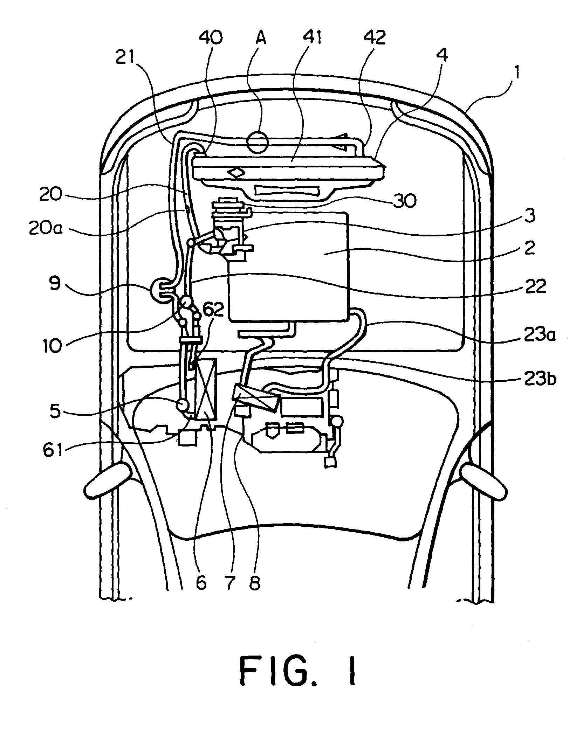

At first referring to Fig. 1, an automobile air conditioner according to this invention is mounted on an automobile having an engine room 1 and a car compartment. In the figure, a whole of the engine room 1 and a part of the car compartment are shown. Various devices of an automobile are not illustrated except an engine 2. The automobile air conditioner comprises a CO₂ refrigerating circuit which includes a compressor 3, a gas cooler 4 as a first heat exchanger, an expansion valve 5, and an evaporator 6 as a second heat exchanger. The compressor 3 and the gas cooler 4 are located in the engine room 1 while the expansion valve 5 and the evaporator 6 are disposed in the car compartment. The compressor 3 is connected to the engine 2 through an interrupter such as an electromagnetic clutch 30. The compressor 3 has a discharge port (not shown) connected via a pipe 20 to an inlet portion 40 of the gas cooler 4. The gas cooler 4 has a core 41 for heat exchange between a refrigerant (CO₂) and external air, and an outlet portion 42 connected via a pipe 21 to an inlet portion 61 of the evaporator 6. The gas cooler 4 is located in the vicinity of the front wall of the engine room 1, taking its heat exchange function into consideration. The expansion valve 5 is coupled to the pipe 21 at an intermediate position thereof. Between the gas cooler 4 and the expansion valve 5, a receiver 9 is coupled to the pipe 21. The receiver 9 temporarily stores the refrigerant flowing from the gas cooler 4 to supply the evaporator 6 with the refrigerant in an amount corresponding to the thermal load. The evaporator 6 has an outlet portion 62 connected via a pipe 22 to a suction port (not shown) of the compressor 3. The pipe 22 is coupled at its intermediate position to an evaporation pressure control valve 10 for controlling an evaporation pressure of the evaporator 6. The pipe 20 is referred to as a first pipeline. The pipe 21 is referred between the gas cooler 4 and the expansion valve 5 to as a second pipeline and between the expansion valve 5 and the evaporator 6 to as a third pipeline. The pipe 22 is referred to as a fourth pipeline.

When the above-mentioned automobile air conditioner is operated, power of the engine 2 is transmitted through the electromagnetic clutch 30 to the compressor 3 to drive the compressor 3. The compressor 3 then compresses the CO₂ refrigerant until a supercritical state is reached. The CO₂ refrigerant compressed and put into the supercritical state is transferred through the pipe 20 to the gas cooler 4. At the gas cooler 4, the CO₂ refrigerant is cooled by heat exchange with the external air (i.e., heat radiation). The CO₂ refrigerant cooled by the gas cooler 4 is sent to the expansion valve 5. At this time, a part of the CO₂ refrigerant is reserved in the receiver 9. Passing through the expansion valve 5, the CO₂ refrigerant is expanded to become into a vapor-liquid hybrid phase and then flows into the evaporator 6. At the evaporator 6, the CO₂ refrigerant is subjected to heat exchange (i.e., heat absorption) to be heated and turned into a vapor phase. Accordingly, the external air around the evaporator 6 is cooled by the heat exchange (i.e., heat absorption by the refrigerant). The CO₂ refrigerant heated by the evaporator 6 to be put into a vapor phase is returned to the compressor 3. A series of steps mentioned above are repeatedly carried out.

The description will be returned to the structure of the automobile air conditioner. An air-conditioner casing 8 is arranged in the car compartment at a position adjacent to the engine room 1. The casing 8 has an internal air intake (not shown) and an external air intake (not shown) formed at one end thereof and is provided with an internal/external air switching unit for controlling introduction of the internal air and the external air. Inside and in the vicinity of each of the above-mentioned intakes, a fan (not shown) is arranged. When the fan is operated, an airstream (not shown) is formed in the casing 8 to flow from a corresponding one of the above-mentioned intakes towards one or ones of air blowout ports (not shown) which will hereafter be described. The casing 8 has the other end provided with a plurality of the above-mentioned air blowout ports (not shown) which are opened in the car compartment, and a switching unit for controllably switching the blowout ports. In the casing 8, a heater core 7 and the evaporator 6 are disposed. The heater core 7 is positioned downstream of the evaporator 6 with respect to the above-mentioned air stream. In the heater core 7, cooling water of the engine is circulated via pipes 23a and 23b. The cooling water heats the air passing through the heater core 7. An air-mixing damper (not shown) is disposed between the evaporator 6 and the heater core 7 to control the temperature of blowout air at the air blowout ports.

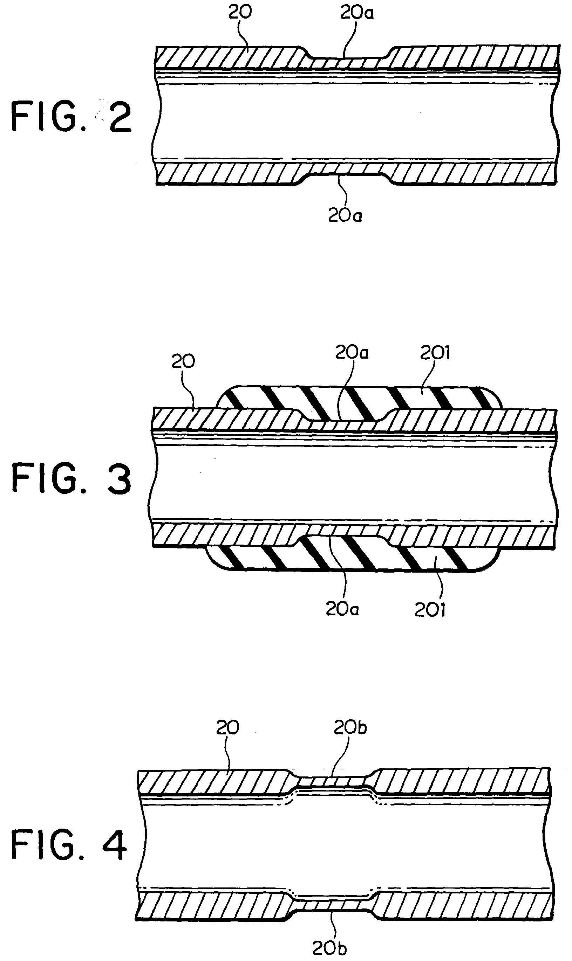

Referring to Fig. 2 in addition, description will be made about a first embodiment of this invention. As illustrated in Fig. 2, the pipe 20 connecting the discharge port (not shown) of the compressor 3 and the inlet portion 40 of the gas cooler 4 is provided with a pressure fragile portion 20a formed at a part of the pipe 20. The fragile portion 20a circularly extends in a circumferential direction of the pipe 20 and is a portion having thickness reduced throughout an entire circumference from the side of the outer peripheral surface of the pipe 20. The fragile portion 20a is designed to have a fatigue strength and a pressure-resistant strength slightly smaller than an allowable fatigue strength and an allowable pressure-resistant strength which are determined for the components (for example, the compressor and the pipes) of the CO₂ refrigerating circuit.

With the above-mentioned structure, the fatigue failure occurs in the fragile portion 20a prior to the other portions of the CO₂ refrigerating circuit. This is because the fatigue strength of the fragile portion 20a is determined smaller than the allowable fatigue strength. In addition, the pressure failure occurs in the fragile portion 20a prior to the other portions of the CO₂ refrigerating circuit if the pressure excessively rises in the high-pressure side of the CO₂ refrigerating circuit. This is because the pressure-resistant strength of the fragile portion 20a is determined smaller than the allowable pressure-resistant strength. Thus, a damaged or broken portion is specified in the CO₂ refrigerating circuit.

It is preferable that the fragile portion 20a is placed in the engine room. With this structure, even if the fragile portion 20a is damaged or broken, it is readily possible to prevent a carbon dioxide gas (CO₂ gas) from leaking into the car compartment.

In addition, it is preferable that the fragile portion 20a does not face or direct to other automobile component devices in the engine room. With this structure, even if the fragile portion 20a is damaged or broken into fragments, the fragments are not scattered towards the other automobile component devices. Therefore, it is possible to avoid damage or fracture of the other automobile component devices.

Referring to Fig. 3, description will be made about a second embodiment of this invention. As illustrated in Fig. 3, a part of the pipe 20 including the fragile portion 20a is coated with a synthetic resin film 201 (for example, EPDM (ethylene-propylene terpolymer)) having elasticity throughout an entire circumference of the outer peripheral surface of the pipe 20. With this structure, even if the fragile portion 20a is damaged or broken into fragments, it is possible to prevent the fragments from being scattered around. Thus, it is possible to more reliably prevent the other automobile component devices from being damaged or broken. The synthetic resin film 201 may be replaced by a rubber film.

Referring to Fig. 4, description will be made about a third embodiment of this invention. As illustrated in Fig. 4, a part of the pipe 20 is provided with a fragile portion 20b having thickness reduced throughout an entire circumference from the sides of both of the outer and the inner peripheral surfaces of the pipe 20. The fragile portion 20b circularly extends in the circumferential direction.

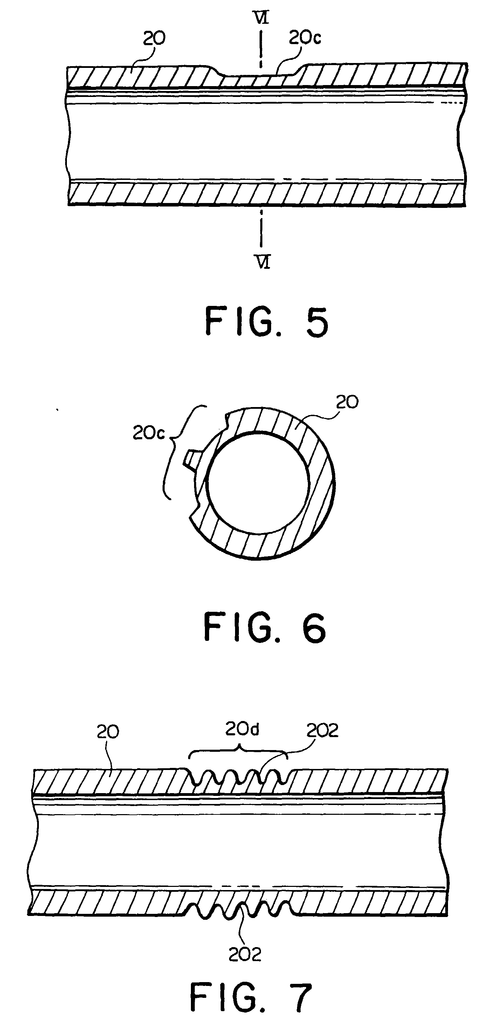

Referring to Figs. 5 and 6, description will be made about a fourth embodiment of this invention. As illustrated in Figs. 5 and 6, a part of the pipe 20 is provided with a fragile portion 20c having thickness reduced from the side of the outer peripheral surface of the pipe 20. The fragile portion 20c partially extends in the circumferential direction. With this structure, a scattering direction of the fragments produced by the damage or the fracture can be preliminarily determined. Therefore, even if the fragile portion 20c is damaged or broken, it is possible to further reliably prevent the other automobile component devices from being damaged or broken by the fragments scattered around.

Referring to Fig. 7, description will be made about a fifth embodiment of this invention. As illustrated in Fig. 7, a part of the pipe 20 is provided with a fragile portion 20d having a plurality of annular grooves 202 adjacent to one another in an axial direction. The annular grooves 202 are formed on the outer peripheral surface of the pipe 20. The number and the sectional shape of the annular grooves 202 are appropriately selected and determined taking into account the allowable fatigue strength and the allowable pressure-resistant strength of the components (for example, the compressor and the pipes) of the CO₂ refrigerating circuit. With this structure, the pipe can be bent without applying an undesired stress and this bent portion can serve as the fragile portion 20d. Thus, the fragile portion can be formed at a curved portion of the pipe if necessary. As described above, according to this embodiment, a greater degree of freedom is allowed for an area where the fragile portion is formed.

In each of the third through the fifth embodiments also, it is possible to coat the outer peripheral surface of the pipe with the synthetic resin film 201 or the rubber film at the area including the fragile portion 20b, 20c, or 20d, in the manner similar to the second embodiment. Particularly in the fifth embodiment, by immersing the fragile portion 20d in a solution of synthetic resin prior to polymerization, synthetic resin will sufficiently spread into the annular grooves 202 so that no unnecessary gap is formed between the film 201 and the pipe.

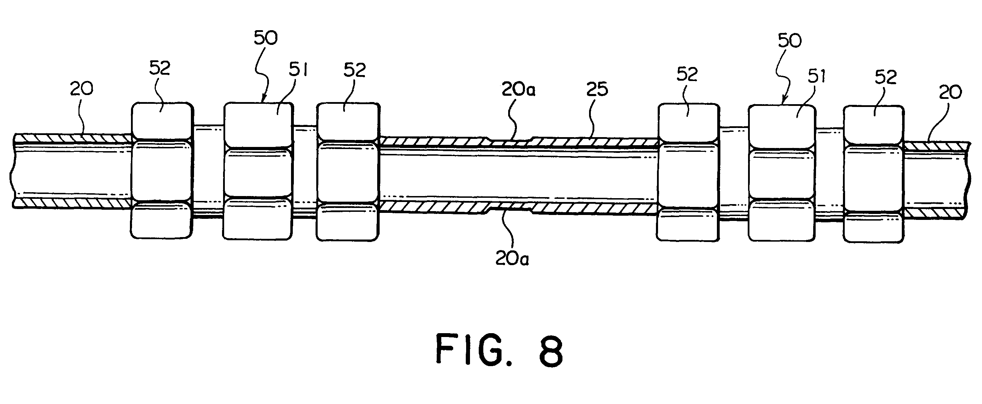

Referring to Fig. 8, description will be made about a sixth embodiment of this invention. The sixth embodiment takes into account a repair work after the damage or the fracture of the pipe. A pipe 25 is inserted at an intermediate portion of the pipe 20. The pipe 25 is provided with the fragile portion 20a illustrated in Fig. 2. The pipe 25 is connected to the pipe 20 by a pair of joints 50. Each of the joints 50 comprises a nipple 51 with male threads formed at both ends thereof, and a pair of cap nuts 52. In a known manner, each of the joints 50 connects one end of the pipe 20 and one end of the pipe 25. It will be understood that airtightness is maintained upon the connection. With this structure, the pipe 25 can readily be exchanged. Therefore, the repair work of the refrigerating circuit after the damage or the fracture of the fragile portion 20a is facilitated. The pipe 25 may have a shape as illustrated in Figs. 4, 5, and 7 and may be coated with synthetic resin or rubber.

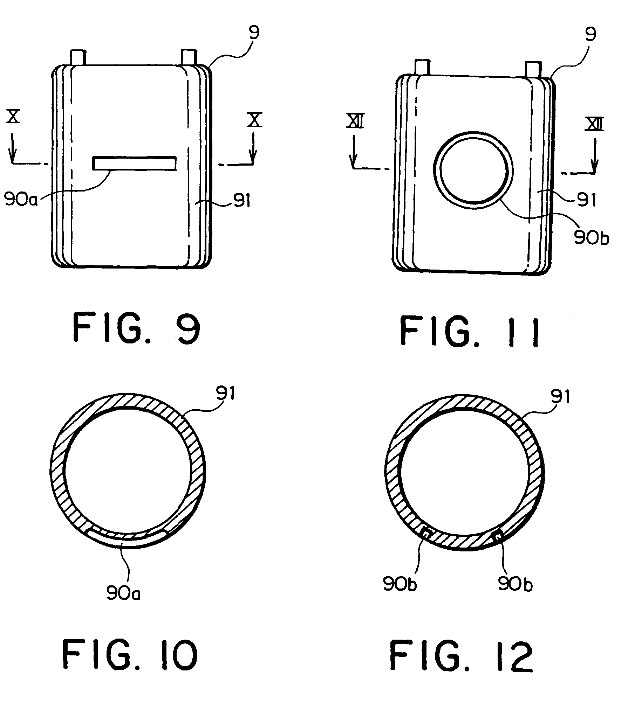

Referring to Figs. 9 and 10, description will be made about a seventh embodiment of this invention. In the seventh embodiment, a functional component of the CO₂ refrigerating circuit is provided with a fragile portion. In Fig. 9, the receiver 9 arranged at the intermediate portion of the pipe 21 connecting the gas cooler 4 and the evaporator 6 is illustrated. As illustrated in Fig. 9, the receiver 9 is a closed case of a generally cylindrical shape with a single groove formed at a center portion of an outer peripheral surface of a body 91 to extend along a circumferential direction. The single groove serves as a fragile portion 90a. If the fragile portion 90a is damaged or broken, the receiver 9 is exchanged to repair the refrigerating circuit. The groove as the fragile portion 90a may be formed along an axial direction. The fragile portion 90a may be coated with synthetic resin or rubber to prevent fragments from being scattered around.

Referring to Figs. 11 and 12, description will be made about an eighth embodiment of this invention. In this embodiment, the single groove in the seventh embodiment may be replaced by an annular groove as a fragile portion 90b. Other structure and the effect are similar to those of the seventh embodiment and will not be described any longer.

In order to prevent the leakage of the carbon dioxide gas (CO₂ gas) into the car compartment as a result of the damage or the fracture of the components of the CO₂ refrigerating circuit, those of the components which are arranged in the car compartment are not provided with the above-mentioned fragile portion.

As described above, according to this invention, in case where the components of the CO₂ refrigerating circuit are broken or damaged due to abnormal pressure rise or metal fatigue, the fragile portion formed at a predetermined position is broken or damaged. Therefore, it is possible to prevent the damage or the fracture of the components of the CO₂ refrigerating circuit from causing further damage or fracture of other automobile component devices and to prevent the carbon dioxide gas (CO₂ gas) from leaking into the car compartment.

In this invention, the fragile portion is not restricted to only one position but may be formed at a plurality of positions. For example, the fragile portion may be formed at a single position in each of the receiver 9 and the pipe 20.

Since the carbon dioxide gas (CO₂ gas) has a high fire-extinguishing ability, the fragile portion is preferably formed in the vicinity of an area in the engine room where a fire tends to be induced. More preferably, the fragile portion is faced to such area.

In view of the efficiency of the repair work, the fragile portion may be formed at a position depicted by A in Fig. 1.

In the foregoing embodiment, description is directed to the automobile air conditioner having the CO₂ refrigerating circuit. However, this invention is not restricted thereto but may be applicable to any other relevant apparatus such as a domestic air conditioner having the CO₂ refrigerating circuit. In a case where the air conditioner is set in a house, each of the evaporator 6 and a part of the pipe 21 is disposed inside the house, while each of the compressor 3, the gas cooler 4, the pipe 20, another part of the pipe 21, and the pipe 22 is disposed outside the house.

## Claims

1. An air conditioner including a refrigerating circuit containing carbon dioxide as a refrigerant, said refrigerating circuit comprising a first heat exchanger (4) for heat radiation from said refrigerant and a second heat exchanger (6) for heat absorption to said refrigerant, characterized in that a pressure fragile portion (20a, 20b, 20c, 20d, 90a, 90b) is formed in at least one portion of said refrigerating circuit.

2. An air conditioner as claimed in claim 1,
wherein said refrigerating circuit further comprises a compressor (3), an expansion mechanism (5), a first pipeline (20) connecting said compressor and said first heat exchanger, a second pipeline (21) connecting said first heat exchanger and said expansion mechanism, a third pipeline (21) connecting said expansion mechanism and said second heat exchanger, and a fourth pipeline (22) connecting said second heat exchanger and said compressor.

3. An air conditioner as claimed in claim 2,
wherein each of said second heat exchanger and a part of said third pipeline is disposed in a car compartment of an automobile, each of said compressor, said first heat exchanger, said expansion mechanism, said first pipeline, said second pipeline, and said fourth pipeline being disposed in an engine room (1) of said automobile.

4. An air conditioner as claimed in claim 2,
wherein each of said second heat exchanger and a part of said third pipeline is disposed inside a house, each of said compressor, said first heat exchanger, said first pipeline, said second pipeline, and said fourth pipeline being disposed outside said house.

5. An air conditioner as claimed in one of claims 2 to 4,
wherein at least one of said first through said fourth pipelines has a pipe (20), said pressure fragile portion being formed in said pipe.

6. An air conditioner as claimed in claim 5,
wherein said pressure fragile portion has thickness reduced only from the side of an outer peripheral surface of said pipe (20), or
only from the side of an inner peripheral surface of said pipe (20), or
from the sides of both of outer and inner peripheral surfaces of said pipe (20).

7. An air conditioner as claimed in claim 5,
wherein said pressure fragile portion (20d) has a plurality of annular grooves (202) formed on an outer peripheral surface of said pipe (20).

8. An air conditioner as claimed in one of claims 2 to 4,
wherein at least one of said first through said fourth pipelines has two joints (50) and a pipe (25) between said joints, said pressure fragile portion (20a) being formed in said pipe (25),
preferably as a thickness which is reduced to form said fragile portion.

9. An air conditioner as claimed in one of claims 2 to 4,
wherein said pressure fragile portion is formed in at least one of said compressor, said first heat exchanger, said expansion mechanism, and said second heat exchanger.

10. An air conditioner as claimed in one of claims 2 to 4,
wherein said refrigerating circuit further comprises a receiver (9) connected to said second pipeline for temporarily storing said refrigerant, said pressure fragile portion being formed in said receiver.

11. An air conditioner as claimed in claim 10,
wherein said receiver is formed with a groove serving as said pressure fragile portion,
preferably said groove extends in a line along an outer peripheral surface of said receiver, or in an annular shape along an outer peripheral surface of said receiver.

12. An air conditioner as claimed in one of claims 5 to 11,
wherein said pipe is coated with synthetic resin (201) having elasticity, preferably being ethylene-propylene terpolymer (EPDM) or synthetic rubber.
